# EUROPEAN PATENT APPLICATION

(11) **EP 2 512 012 A2**
(43) Date of publication of application: **17.10.2012**
(21) Application number: 12163431.5
(22) Date of filing: 05.04.2012
(51) Int. Cl.: H02K 15/04

(54) **Electrical machine component mounting apparatus**

(30) Priority: 14.04.2011 TR 201103641
(71) Applicant: General Electric Company, Schenectady, NY 12345 (US)
(72) Inventor: Ozturk, Ozgen, 41470 Gebze Kocaeli (TR)
(74) Representative: Cleary, Fidelma

(57) **Abstract**

A mounting apparatus includes a channel assembly (406) having side members (405) defining opposing channels (407), a first mount block (202) member slidably engaging the opposing channels (407), a second mount block (202) member slidably engaging the opposing channels (407), a first end member disposed at a first distal end of the channel assembly (406), and a second end member disposed at a second distal end of the channel assembly (406).

## Description

### BACKGROUND OF THE INVENTION

The subject matter disclosed herein relates to electrical machine poles and the winding of electrical machine poles.

Many electrical machines include poles that include metallic plates wound with wire. The windings on the poles may periodically need to be replaced in a rewinding procedure. A typical rewinding procedure, the poles are removed from the machine, and the windings are removed. The metallic plates may be mounted to a turning apparatus such as, for example, a lathe machine. A wire is attached and wound about the plate by rotating the plate with the turning apparatus.

The metallic plate of the pole includes mounting holes that are used to mount the pole to the electrical machine. In the rewinding procedure the mounting holes are used to mount the pole to the turning apparatus.

### BRIEF DESCRIPTION OF THE INVENTION

According to one aspect, the invention resides in a mounting apparatus including a channel assembly having side members defining opposing channels, a first mount block member slidably engaging the opposing channels, a second mount block member slidably engaging the opposing channels, a first end member disposed at a first distal end of the channel assembly, and a second end member disposed at a second distal end of the channel assembly.

According to another aspect, the invention resides in a method for fabricating an electrical machine component includes connecting a first mounting block to the component, connecting a second mounting block to the component, attaching a channel assembly to a rotating apparatus, and arranging the component such that the first mounting block and the second mounting block slidably engage the channel assembly.

These and other advantages and features will become more apparent from the following description taken in conjunction with the drawings.

### BRIEF DESCRIPTION OF THE DRAWING

Embodiments of the present invention will now be described, by way of example only, with reference to the accompanying drawings in which:
FIG. 1 illustrates a perspective view of an example of a pole.
FIG. 2 illustrates a perspective view of an exemplary embodiment of a mount block member and a spacer member.
FIG. 3 illustrates an exemplary embodiment of mount blocks and spacers attached to the pole of FIG. 1.
FIG. 4 illustrates a perspective view of a rotating apparatus and a portion of a mount assembly.
FIG. 5 illustrates a perspective, partially transparent view of the mount assembly with the pole mounted to the mount assembly.
FIG. 6 illustrates a perspective, partially transparent view of the mount assembly.
FIG. 7 illustrates another perspective, partially transparent view of the mount assembly.

The detailed description explains embodiments of the invention, together with advantages and features, by way of example with reference to the drawings.

### DETAILED DESCRIPTION OF THE INVENTION

Electrical machines such as, for example, motors and generators often include poles that include metal plates that are wound with wire. The rewinding procedure for a pole includes removing the pole from the electrical machine, and removing the wire from the pole. The metallic plate of the pole includes mounting holes that are often threaded and are operative to mount the pole to the electrical machine. Often a mounting plate is fabricated with holes that match the size and location of the mounting holes in the pole. The pole is attached to the mounting plate, and the mounting plate and pole are secured to a rotating apparatus such as a lathe machine. The rotating apparatus includes a shaft and a fixture or chuck attached to the shaft that is operative to secure objects, such as the mounting plate, to the rotating shaft. A portion of a wire is attached to the metal plate of the pole and the pole is rotated by the rotating apparatus. The wire is wound about the metal plate as the plate rotates forming the rewound pole.

In a workshop environment, a variety of different types of poles may be rewound. The different types of poles may include metallic plates with mounting holes having a variety of mount hole locations, diameters, and thread pitches. To mount different types of poles on a rotating apparatus, a mounting plate is fabricated with holes that match the mount holes of each type of pole. Thus, for each pole having different mount hole dimensions, a unique mounting plate is fabricated. The illustrated embodiments described below include a mounting apparatus that allows poles having a variety of different mount hole locations, sizes, and thread pitches to be attached to the mounting apparatus that is secured to the rotating apparatus without fabricating a unique mounting plate.

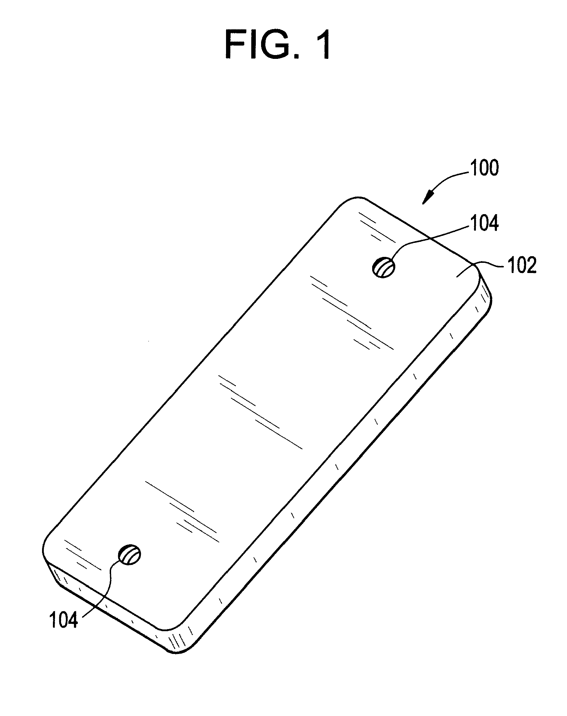

FIG. 1 illustrates a perspective view of an example of a pole 100. The pole 100 includes a plate portion 102 and mount holes 104. The mount holes 104 have a diameter (d) and may include a threaded interior surface.

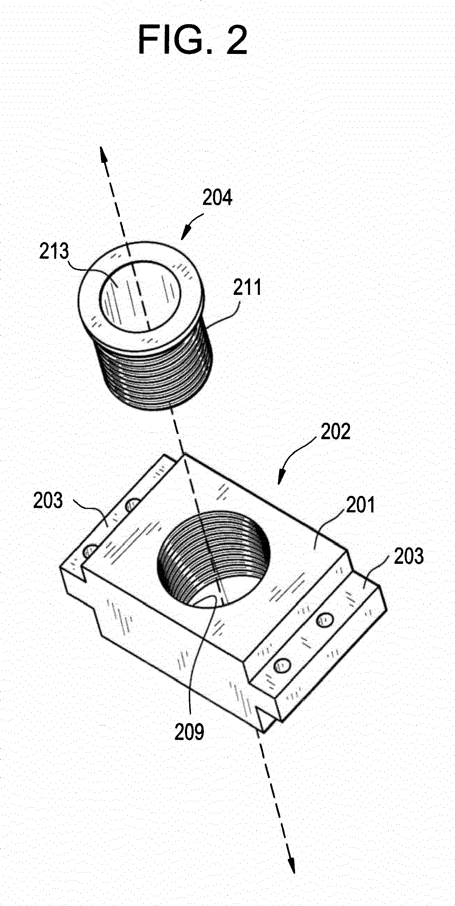

FIG. 2 illustrates a perspective view of an exemplary embodiment of a mount block member (mount block) 202 and a spacer member (spacer) 204. The mount block 202 may be formed from, for example, a metallic material such as steel or another metallic material. The mount block 202 includes a body portion 201 and extension portions 203 that extend from opposing sides of the body portion 201. The extension portions 203 may include holes 205 that pass through the extension portions 203. The body portion 201 defines an orifice 207 having a diameter (d'). In the illustrated embodiment, the orifice 207 has a threaded inner surface 209. The spacer 204 includes a threaded outer surface 211 having an approximate diameter d' and a smooth inner surface 213 having an approximate inner diameter d, that corresponds to the diameter d of the mount holes 104 of the pole 100 (of FIG. 1). The orifice 207 is operative to engage and retain the spacer 204.

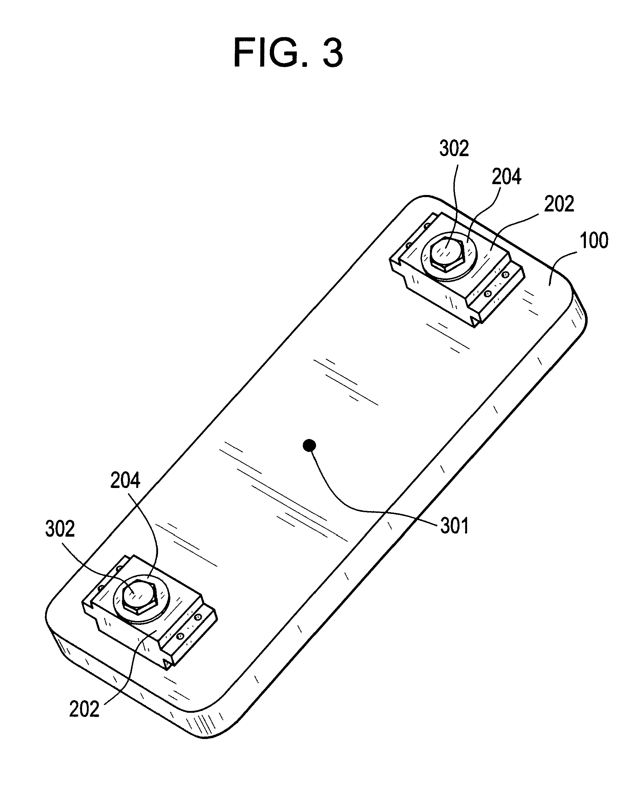

FIG. 3 illustrates an exemplary embodiment of mount blocks 202 and spacers 204 attached to the pole 100 with fasteners 302. In this regard, the spacer 204 is inserted into the orifice 207 of the mount block 202. The inner diameter of the spacer 204 is aligned with the mount hole 104 (of FIG. 1) and the assembly is secured with the fastener 302 that is threaded into the mount hole 104. The use of the spacer 204 allows the mount block 202 to be used with poles 100 having different sized mount holes 104. For example, if a similar pole having a different arrangement of mount holes 104 is used, a spacer 204 having an inner diameter corresponding to the inner diameter of the particular mount hole 104, and a corresponding fastener 302 may be used to secure the mount block 202 to the pole 100. Though the illustrated embodiments include a mount block 202 and spacer 204 arrangement that allows the mount block 202 to be used with a variety of different sized mount holes 104 (by using an appropriately sized spacer 204), alternate embodiments may include a mount block 202 having a smooth bore orifice 207 sized to correspond to the diameter of a particular mount hole 104 without the use of the spacer 204. The center of mass of the illustrated embodiment is illustrated by the point 301.

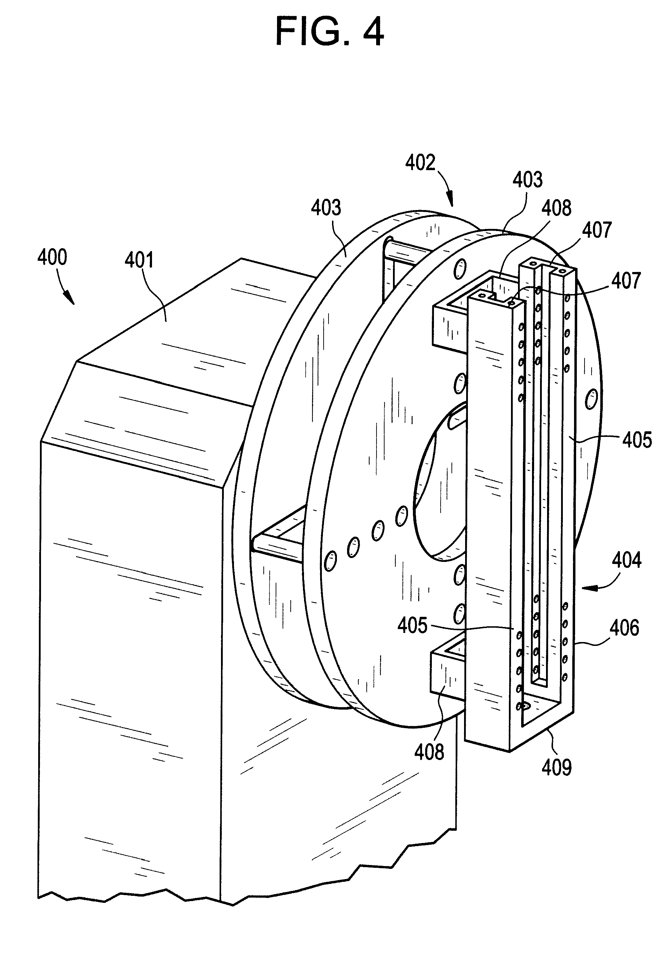

FIG. 4 illustrates a perspective view of a rotating apparatus 400 and a portion of a mount assembly 404. In the illustrated embodiment, the rotating apparatus 400 includes a stationary portion 401 and a rotating portion 402. The rotating portion includes mounting plates 403 that are attached with an arrangement of fasteners. Though the illustrated embodiment includes two mounting plates 403, alternate embodiments may include a single mounting plate 403. The mount assembly 404 includes a channel assembly 406 that is attached to the mounting plate 403 with an arrangement of brackets 408 and fasteners (not shown). The channel assembly 406 includes opposing side members 405 that define opposing channels 407. The channels 407 are sized and shaped to engage the extension portions 203 of the mount blocks 202 (of FIG. 2). The channel assembly 406 includes a base plate portion 409. The base plate portion 409 and side members 405 of the illustrated embodiment are formed from a single, continuous blank material. However, an alternate exemplary embodiment may include a base plate portion 409 that is attached to distal ends of the side members 405 with fasteners (not shown).

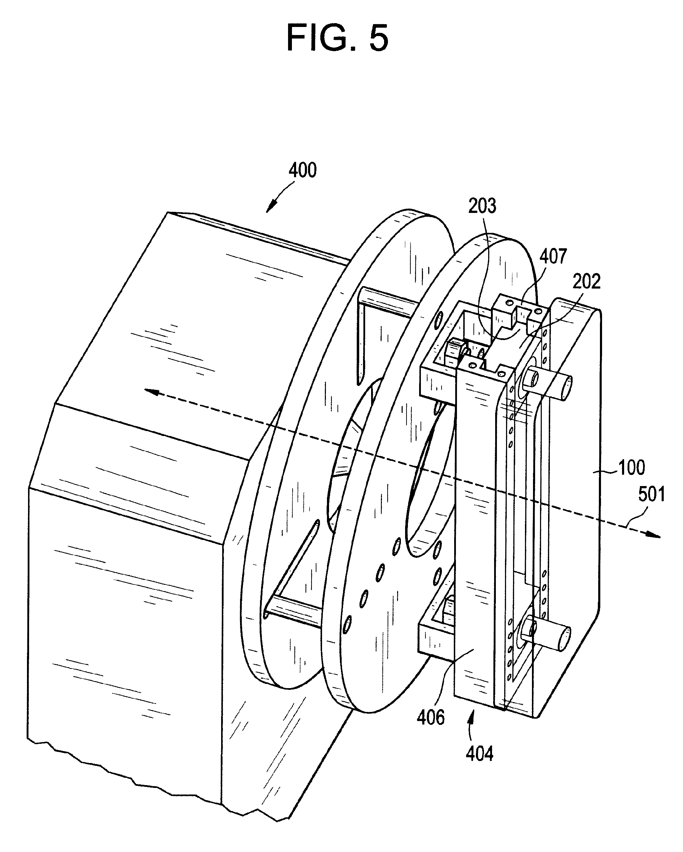

FIG. 5 illustrates a perspective, partially transparent view of the mount assembly 404 with the pole 100 mounted to the mount assembly 404. In this regard, the extension portions 203 of the mount blocks 202 slidably engage the channels 407 of the channel assembly 406. The axis of rotation of the rotating apparatus 400 is indicated by the line 501.

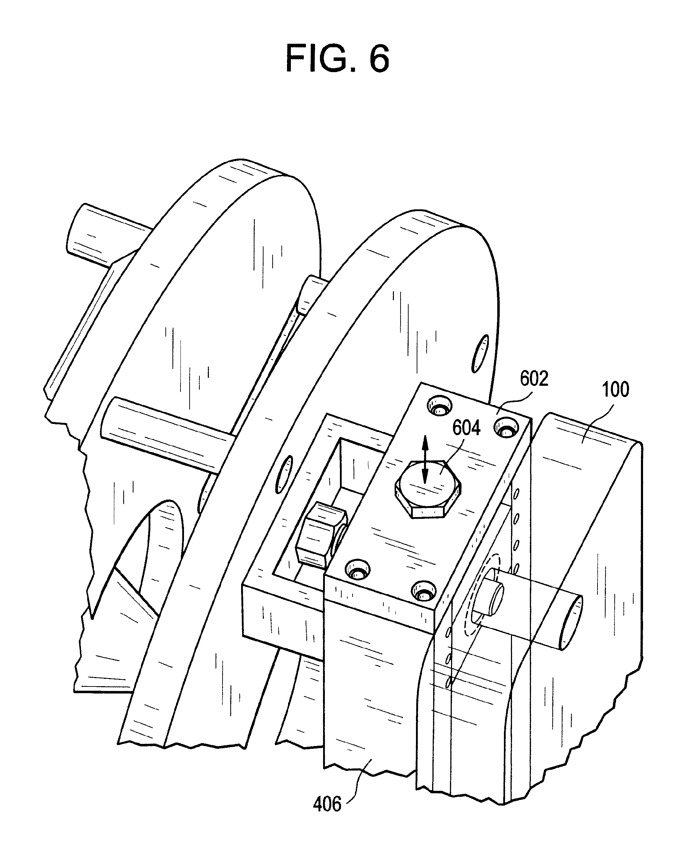

FIG. 6 illustrates a perspective, partially transparent view of the mount assembly 404. The illustrated embodiment includes a cap plate portion 602 that is secured to the channel assembly 406 with fasteners following the mounting of the pole 100 to the mount assembly 404. The cap plate portion 602 includes a threaded orifice that engages an alignment member 604. In the illustrated embodiment, the alignment member 604 includes a threaded bolt or stud that engages the cap plate portion 602. The alignment member 604 extends through the cap plate portion 602 and contacts the mount block 202. The alignment member 604 is adjustable and is operative to exert a force on the mount block 202 along the longitudinal axis of the mount assembly 404.

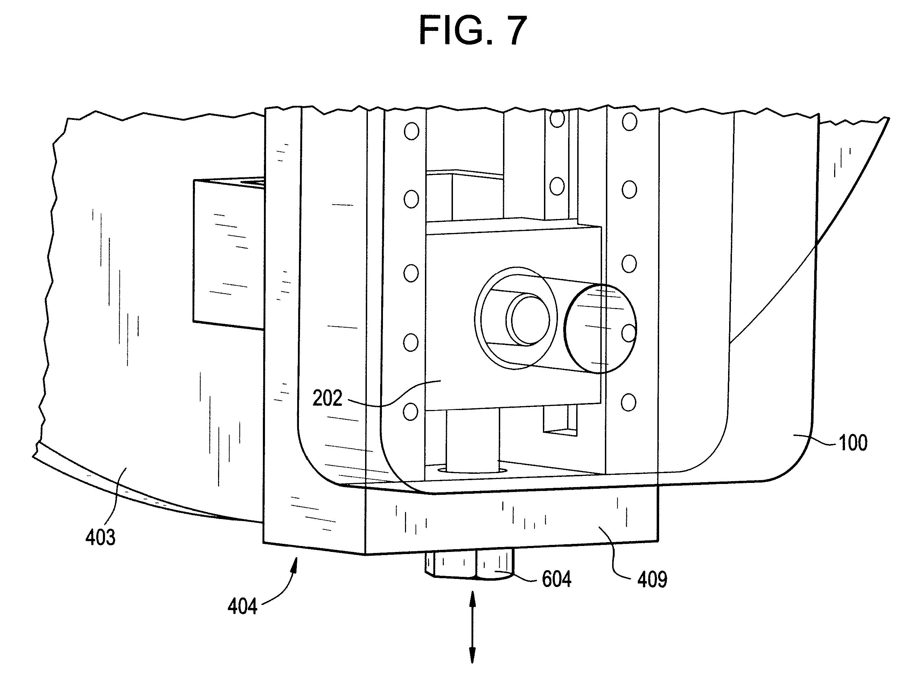

FIG. 7 illustrates a perspective, partially transparent view of the mount assembly 404. The illustrated embodiment includes an alignment member 604 similar to the alignment member 604 described above that engages the base plate portion 409 and contacts the mount block 202. The alignment members 604 exert opposing forces on the mount blocks 202 that retain the position of the mount blocks 202 (and attached pole 100). Since the alignment members 604 are adjustable, they may be adjusted to secure and align the pole 100 with the rotational axis of the rotating apparatus 400 (of FIG. 4).

The mount assembly 404 described above allows poles 100 having a variety of mounting hole arrangements to be mounted to the rotating apparatus 400 with the mount assembly 404 without fabricating a mounting plate for each type of pole 100. While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A mounting apparatus comprising:
a channel assembly (406) having side members (405) defining opposing channels (407);
a first mount block (202) member slidably engaging the opposing channels (407);
a second mount block (202) member slidably engaging the opposing channels (407);
a first end member disposed at a first distal end of the channel assembly (406); and
a second end member disposed at a second distal end of the channel assembly (406).

2. The apparatus of claim 1, wherein the first mount block (202) member and the second mount block (202) member are attached to a component of an electrical machine.

3. The apparatus of claim 1 or 2, wherein the first mount block (202) member comprises:
a body portion (201);
opposing extension portions (203), the extension portions (203) extending from the body portion (201); and
an orifice (207) defined by the body portion (201).

4. The apparatus of claim 3, wherein the first block member slidably engages the opposing channels (407) with the opposing extension portions (203) of the first mount block (202) member.

5. The apparatus of claim 3 or 4, wherein the apparatus further comprises a first spacer (204) portion operative to engage the orifice (207) defined by the body portion (201) to define a spacer (204) orifice (207) having a diameter less than the diameter of the orifice (207) defined by the body portion (201).

6. The apparatus of any of claims 3 to 5, wherein the apparatus further comprises:
a first fastener (302) passing through the orifice (207) defined by the body portions of the first mount block (202) member, the first fastener (302) engaging a component of an electrical machine; and
a second fastener (302) passing through an orifice (207) defined by a body portion (201) of the second block member, the second fastener (302) engaging the component of the electrical machine.

7. The apparatus of claim 6, wherein the component of the electrical machine includes a pole (100).

8. The apparatus of any preceding claim, wherein the apparatus further comprises:
a first alignment member (604) engaging the a first end member;
a second alignment member (604) engaging the second end member.

9. The apparatus of claim 8, wherein the first alignment member (604) is operative to secure the first mount block (202) member in the channel assembly (406), and the second alignment member (604) is operative to secure the second mount block (202) member in the channel assembly (406).

10. The apparatus of claim 8 or 9, wherein the first alignment member (604) includes a fastener (302) operative to engage an orifice (207) in the first end member and contact a surface of the first mount block (202) member.

11. The apparatus of any preceding claim, wherein the channel assembly (406) is connected to a rotating apparatus (400).

12. A method for fabricating an electrical machine component, the method comprising:
connecting a first mounting block (202) to the component;
connecting a second mounting block (202) to the component;
attaching a channel assembly (406) to a rotating apparatus (400); and
arranging the component such that the first mounting block (202) and the second mounting block (202) slidably engage the channel assembly (406).

13. The method of claim 12, wherein the method further comprises attaching an end plate to the channel (602) assembly (406).

14. The method of claim 12 or 13, wherein the method further comprises aligning the first mounting block (202) and the second mounting block (202) such that a center of gravity of the component is substantially aligned with an axis of rotation of the rotating apparatus (400).

15. The method of any of claims 12 to 14, wherein the method further comprises:
securing a portion of a wire to the component;
starting the rotating apparatus (400); and
winding the wire about a portion of the component.
